# EUROPEAN PATENT APPLICATION

(11) **EP 3 493 487 A1**
(43) Date of publication of application: **05.06.2019**
(21) Application number: 17833434.8
(22) Date of filing: 13.07.2017
(51) Int. Cl.: H04L 12/701, H04L 12/753, H04L 12/723

(54) **METHOD AND DEVICE FOR FORWARDING MESSAGE**

(30) Priority: 27.07.2016 CN 201610604543
(71) Applicant: ZTE Corporation, Shenzhen, Guangdong 518057 (CN)
(72) Inventor: PENG, Shaofu, Shenzhen Guangdong 518057 (CN); HAN, Jie, Shenzhen Guangdong 518057 (CN)
(74) Representative: Aipex B.V.
(86) International application number: PCT/CN2017/092806
(87) International publication number: WO 2018/019131

(57) **Abstract**

The present invention provides a method and a device for forwarding a packet. The method includes: receiving, by a first node, a packet to be forwarded, where a destination address of the packet is a second node; searching, by the first node, a plurality of pre-generated paths for a target path corresponding to the packet, where the plurality of pre-generated paths include a first path, a second path and a third path, the first path and the second path are paths which reach the second node and are generated according to a maximum redundant tree (MRT) algorithm, and the third path is a path which reaches the second node and is generated according to a shortest path first (SPF) algorithm; searching, by the first node, a plurality of pre-generated segment lists for a target segment list corresponding to the target path when the target path is one of the first path and the second path; and searching, by the first node, the target path for a next hop node for forwarding to the second node and forwarding the packet to the next hop node according to the target segment list.

## Description

### TECHNICAL FIELD

The present invention relates to, but is not limited to, communications and, in particular, to a method and a device for forwarding a packet.

### BACKGROUND

The Maximally Redundant Trees (MRT) Fast Re-Route (FRR) is a new FRR technology. This technology uses two mostly different forwarding topologies, thereby providing 100% protection on a single-point link fault or a single-point node fault. The MRT architecture defines two forwarding mechanisms: the Label Distribution Protocol (LDP) forwarding mechanism and the IP-tunnel forwarding mechanism. The LDP forwarding mechanism distinguishes the default topology forwarding behavior from the MRT forwarding behavior through different labels, so that the forwarding plane may support the MRT-FRR without any upgrade. The IP-tunnel forwarding mechanism needs to waste a dedicated MRT loopback address to support forwarding, and also enables the forwarding plane to support the MRT-FRR without any upgrade. Compared with the IP-tunnel forwarding mechanism, the LDP forwarding mechanism is more reasonable. Therefore, the default MRT profile of the MRT architecture uses the LDP forwarding mechanism. Currently, other MRT Profiles have not been defined yet.

The segment routing technology enables a node to specify a forwarding path for the packet rather than a general shortest path. Since information related to a Segment List composed of Segment IDs, it is unnecessary to maintain status information of each path does on an intermediate node. The segment routing mainly extends the Interior Gateway Protocol (IGP) to support the notification and learning of the Segment ID. Generally, in the network where the segment routing is deployed, the LDP and the Resource Reservation Protocol-Traffic Extension (RSVP-TE) no longer need to be deployed. In the segment routing network, the known FRR technology has a Topology Independent Loop Free Alternate (TI-LFA), but the protection rules defined by the TI-LFA are complicated and immature.

### SUMMARY

The following is a summary of the subject matter described herein in detail. This summary is not intended to limit the scope of the claims.

Embodiments of the present invention provide a method and a device for forwarding a packet to implement the combination of the segment routing network and the MRT function.

An embodiment of the present invention provides a method for forwarding a packet. The method includes: receiving, by a first node, a packet to be forwarded, where a destination address of the packet is a second node; searching, by the first node, a plurality of pre-generated paths for a target path corresponding to the packet, where the plurality of pre-generated paths include a first path, a second path and a third path, the first path and the second path are paths which reach the second node and are generated according to a maximum redundant tree (MRT) algorithm, and the third path is a path which reaches the second node and is generated according to a shortest path first (SPF) algorithm; searching, by the first node, a plurality of pre-generated segment lists for a target segment list corresponding to the target path when the target path is one of the first path and the second path, where the plurality of pre-generated segment lists include a first segment list and a second segment list, the first segment list includes the first path, and the second segment list includes the second path; and searching, by the first node, the target path for a next hop node for forwarding to the second node and forwarding the packet to the next hop node according to the target segment list.

In one embodiment, each of the plurality of pre-generated segment lists includes at least one of: an adjacency segment list, and a segment list including a node segment. When a last one segment in the each of the plurality of pre-generated segment lists is an adjacency segment, a remote node of the adjacency segment is an MRT Egress. When the last one segment in the each of the plurality of pre-generated segment lists is the node segment, the node segment is the MRT Egress.

In one embodiment, the method further includes: determining, by the first node, a protection path for protecting the third path from the first path and the second path according to the MRT algorithm.

In one embodiment, the step in which the first node searches a plurality of pre-generated segment lists for a target segment list corresponding to the target path includes: determining, by the first node, whether a link in the third path for reaching the second node fails or not; and when the link does not fail, determining, by the first node, that the third path is the target path; and/or when the link fails, determining, by the first node, that the protection path is the target path.

In one embodiment, before receiving, by the first node, the packet to be forwarded, the method further includes at least one of: generating, by the first node, a first topology according to the MRT algorithm and determining the first path from the first topology; generating, by the first node, a second topology according to the MRT algorithm and determining the second path from the second topology; and generating, by the first node, a third topology according to the SPF algorithm and determining the third path from the third topology.

In one embodiment, the step in which the first node generates a first topology and a second topology according to the MRT algorithm, and generates a third topology according to the SPF algorithm includes: determining, by the first node, an MRT Island where the first node is located, where the MRT Island is formed through mutual negotiation between the first node and remaining nodes in an area or at a level where the first node is located according to an open shortest path first (OSPF) on the first node and the remaining nodes which are located in a same area or at a same level as the first node or after a segment routing (SR) and an MRT profile are enabled in an intermediate system-to-intermediate system (ISIS) instance; and generating, by the first node, the first topology and the second topology by running the MRT algorithm based on the MRT Island, and generating the third topology by running the SPF algorithm based on the area or the level.

In one embodiment, the MRT profile specifies to use a tunnel forwarding mechanism of a label stack with one or more outgoing labels formed based on a segment list.

In one embodiment, the method further includes: allocating, by the first node, a plurality of Segment Routing Global Blocks (SRGBs) to the third topology, and flooding the plurality of SRGBs in all areas or at all levels where the first node is located; and receiving, by the first node, a plurality of SRGBs of the third topology on remaining nodes, recording the plurality of SRGBs of the third topology on the remaining nodes and notifying the plurality of SRGBs of the third topology on the remaining nodes to a node other than the remaining nodes.

In one embodiment, the method further includes: when the target path is the third path, encapsulating, by the first node, an SR label, allocated by a next hop node of the third path to a destination prefix-sid, into the packet, and sending the encapsulated packet to a next hop node which is found in the third path and used for forwarding the encapsulated packet to the second node.

In one embodiment, the step in which the first node forwards the packet to the next hop node according to the target segment list includes: determining, by the first node, an SR outgoing label stack of a Next Hop Label Forwarding Entry (HHLFE) including the target segment list; and encapsulating, by the first node, the SR outgoing label stack of the NHLFE including the target segment list into the packet, and sending the encapsulated packet to the next hop node.

In one embodiment, the step in which the first node encapsulates the SR outgoing label stack of the NHLFE including the target segment list into the packet includes: when the packet is an IP packet, pushing, by the first node, the SR outgoing label stack of the NHLFE on an Internet Protocol (IP) header of the IP packet; and/or when the packet is an SR label packet, replacing, by the first node, an incoming label of the SR label packet with the SR outgoing label stack of the NHLFE.

In one embodiment, the step in which the first node determines an SR outgoing label stack of the NHLFE including the target segment list includes: when the target segment list is the adjacency segment list, determining an index SID of each segment of a link, starting from a second adjacency segment, in the target segment list, forming, in a path order, the SID of each segment of the link and an SR label, allocated by an MRT Egress of the target path to a destination prefix-sid, into a label stack sequentially from a top of the stack to a bottom of the stack, and using the formed label stack as the SR outgoing label stack of the NHLFE; when the target segment list is a node segment list, determining an SR outgoing label corresponding to each segment, starting from a first node segment, in the target segment list, forming, in the path order, the SR outgoing label corresponding to each segment and the SR label, allocated by the MRT Egress of the target path to the destination prefix-sid, into the label stack sequentially from the top of the stack to the bottom of the stack, and using the formed label stack as the SR outgoing label stack of the NHLFE; and when the target segment list is the segment list including the node segment and the adjacency segment, determining the SR outgoing label corresponding to each segment, starting from a first segment, in the target segment list, forming, in the path order, the SR outgoing label corresponding to each segment and the SR label, allocated by the MRT Egress of the target path to the destination prefix-sid, into the label stack sequentially from the top of the stack to the bottom of the stack, and using the formed label stack as the SR outgoing label stack of the NHLFE, where when the first segment is the adjacency segment, the first segment has no corresponding SR outgoing label.

In one embodiment, the method includes at least one of: determining, by the first node, the SR label allocated by the MRT Egress of the target path to the destination prefix-sid, which includes: determining an SRGB allocated by the MRT Egress to a third topology and an SID of a route reaching the second node within the third topology, and determining the SR label allocated by the MRT Egress of the target path to the destination prefix-sid based on the SRGB allocated by the MRT Egress to the third topology and the SID of the route reaching the second node within the third topology; when the first segment of the target segment list is the node segment, determining, by the first node, an outgoing label corresponding to the first node segment in the target segment list, which includes: determining an SRGB allocated by a next hop node reaching the first node segment in the target segment list within the third topology and a node SID of the first node segment within the third topology, and determining the outgoing label corresponding to the first node segment in the target segment list based on the SRGB allocated by the next hop node reaching the first node segment in the target segment list within the third topology and the node SID of the first node segment within the third topology; and when the target segment list is the segment list including the node segment, determining, by the first node, an outgoing label corresponding to each of remaining node segment other than the first segment in the target segment list, which includes: determining an SRGB, allocated by a node, where a previous segment of the each of the remaining node segments is located, to the third topology, in the target segment list and a node SID of the each of the remaining node segments within the third topology, and determining the outgoing label corresponding to the each of the remaining node segments other than the first segment in the target segment list based on the SRGB, allocated by the node, where the previous segment of the remaining node segments is located, to the third topology, in the target segment list and the node SID of the remaining node segments within the third topology, where the node where the previous segment is located is one of: a node represented by the node segment when the previous segment is the node segment and a node represented by the remote node of the adjacency segment when the previous segment is the adjacency segment.

In one embodiment, the method further includes: forwarding, by the MRT Egress of the target path, the packet to the second node based on a next layer label or an IP header after popping the label stack of the target segment list, where when the MRT Egress and the second node are a same node, the packet is sent to the control plane of the second node.

An embodiment of the present invention provides a device for forwarding a packet. The device is applied to a first node and includes: a receiving module, which is configured to receive a packet to be forwarded, where a destination address of the packet is the second node; a first searching module, which is configured to search a plurality of pre-generated paths for a target path corresponding to the packet, where the plurality of pre-generated paths include a first path, a second path and a third path, the first path and the second path are paths which reach the second node and are generated according to a maximum redundant tree (MRT) algorithm, and the third path is a path which reaches the second node and is generated according to a shortest path first (SPF) algorithm; a second searching module, which is configured to search a plurality of pre-generated segment lists for a target segment list corresponding to the target path when the target path is one of the first path or the second path, where the plurality of pre-generated segment lists include a first segment list and a second segment list, the first segment list includes the first path, and the second segment list includes the second path; and a forwarding module, which is configured to search the target path for a next hop node for forwarding to the second node, and forward the packet to the next hop node according to the target segment list.

Another embodiment of the present invention provides a storage medium. The storage medium is configured to store program codes for executing the steps described above.

With embodiments of the present invention, the MRT function is introduced into the segment routing network, thereby implementing the combination of the segment routing network and the MRT function.

Other aspects can be understood after the drawings and detailed description are read and understood.

### BRIEF DESCRIPTION OF DRAWINGS

FIG. 1 is a flowchart of a method for forwarding a packet according to an embodiment of the present invention;
FIG. 2 is a schematic diagram of MRT profile options according to an embodiment of the present invention;
FIG. 3 is a schematic diagram of a network topology according to embodiment 1 of the present invention;
FIG. 4 is a schematic diagram of a network topology according to embodiment 2 of the present invention;
FIG. 5 is a schematic diagram of a network topology according to embodiment 3 of the present invention; and
FIG. 6 is a block diagram of a device for forwarding a packet according to an embodiment of the present invention.

### DETAILED DESCRIPTION

The present invention will be described hereinafter in detail through embodiments with reference to the drawings. It is to be noted that the terms "first", "second" and the like in the description, claims and drawings of the present invention are used to distinguish between similar objects and are not necessarily used to describe a particular order or sequence.

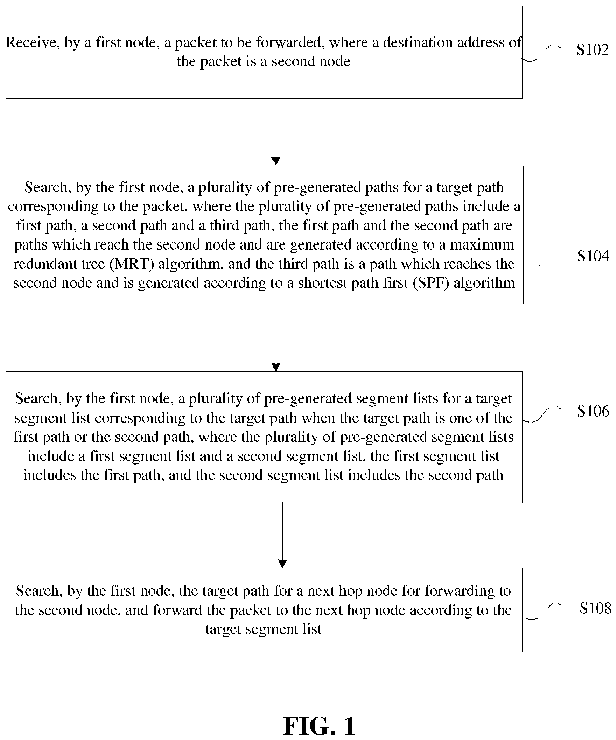

An embodiment of the present invention provides a method for forwarding a packet. FIG. 1 is a flowchart of a method for forwarding a packet according to an embodiment of the present invention. As shown in FIG. 1, the process of the method includes the following steps.

In step S102, a first node receives a packet to be forwarded, where a destination address of the packet is a second node.

In step S104, the first node searches a plurality of pre-generated paths for a target path corresponding to the packet, where the plurality of pre-generated paths include a first path, a second path and a third path, the first path and the second path are paths which reach the second node and are generated according to a maximum redundant tree (MRT) algorithm, and the third path is a path which reaches the second node and is generated according to a shortest path first (SPF) algorithm.

In step S106, the first node searches a plurality of pre-generated segment lists for a target segment list corresponding to the target path when the target path is one of the first path and the second path, where the plurality of pre-generated segment lists include a first segment list and a second segment list, the first segment list includes the first path, and the second segment list includes the second path.

In step S108, the first node searches the target path for a next hop node for forwarding to the second node, and forwards the packet to the next hop node according to the target segment list. The first node described above may be any node in a MRT Island. The second node may be any node in an SR Domain and the second node may be disposed within the MRT Island or outside the MRT Island.

In the embodiment described above, when the packet is forwarded to the next hop node, the first node may forward the packet according to a predetermined forwarding mechanism. The predetermined forwarding mechanism may be a tunnel forwarding mechanism of a label stack with one or more outgoing labels formed based on a segment list.

Through the steps described above, an MRT function is introduced into a segment routing network, thereby implementing the combination of the segment routing network and the MRT function.

In one embodiment, each of the segment lists described above may be an adjacency segment list, or may be a segment list including a node segment. When a last one segment in the each of the segment lists is an MRT Egress corresponding to the path, that is the last one segment is an adjacency segment, a remote node of the adjacency segment is the MRT Egress. When the last one segment is the node segment, the node segment is the MRT Egress.

In one embodiment, the method further includes: determining, by the first node, a protection path for protecting the third path from the first path and the second path according to the MRT algorithm. In this embodiment, the determined protection path may be the first path, or may be the second path. Determining which path as the protection path should be performed according to the actual situation.

In one embodiment, the step in which the first node searches a plurality of pre-generated segment lists for a target segment list corresponding to the target path includes: determining, by the first node, whether a link in the third path for reaching the second node fails or not; and when the link does not fail, determining, by the first node, that the third path is the target path; and/or when the link fails, determining, by the first node, that the protection path is the target path. In this embodiment, when the link does not fail, the packet may be forwarded by using a default path, and when the link fails, the packet is forwarded by using the protection path.

In one embodiment, before receiving, by the first node, the packet to be forwarded, the method further includes at least one of: generating, by the first node, a first topology according to the MRT algorithm and determining the first path from the first topology; generating, by the first node, a second topology according to the MRT algorithm and determining the second path from the second topology; and generating, by the first node, a third topology according to the SPF algorithm and determining the third path from the third topology. In this embodiment, one of the first topology and the second topology may an MRT-red topology, and the other may be an MRT-blue topology. The third topology may be an MT-default topology.

In one embodiment, the step in which the first node generates a first topology and a second topology according to the MRT algorithm, and generates a third topology according to the SPF algorithm includes: determining, by the first node, an MRT Island where the first node is located, where the MRT Island is formed through mutual negotiation between the first node and remaining nodes in an area or at a level where the first node is located according to an open shortest path first (OSPF) on the first node and the remaining nodes which are located in a same area or at a same level as the first node or after a segment routing (SR) and an MRT profile are enabled in an intermediate system-to-intermediate system (ISIS) instance; and generating, by the first node, the first topology and the second topology by running the MRT algorithm based on the MRT Island, and generating the third topology by running the SPF algorithm based on the area or the level. The first node is disposed within the MRT Island, and the second node is disposed within the SR Domain. The second node may be disposed within the MRT Island, or may be disposed outside the MRT Island.

In one embodiment, the MRT profile specifies to use the predetermined forwarding mechanism described above, that is, use the tunnel forwarding mechanism of a label stack with one or more outgoing labels formed based on the segment list.

In one embodiment, the method further includes: allocating, by the first node, a plurality of Segment Routing Global Blocks (SRGBs) to the third topology, and flooding the plurality of SRGBs in all areas or at all levels where the first node is located; and receiving, by the first node, a plurality of SRGBs of the third topology on remaining nodes, recording the plurality of SRGBs of the third topology on the remaining nodes and notifying the plurality of SRGBs of the third topology on the remaining nodes to a node other than the remaining nodes. In this embodiment, each of the nodes may generate one SRGB for the third topology, and the SRGBs generated by different nodes are independent from each other.

In one embodiment, the method further includes: when the target path is the third path, encapsulating, by the first node, an SR label, allocated by a next hop node of the third path to a destination prefix-sid, into the packet, and sending the encapsulated packet to a next hop node which is found in the third path and used for forwarding the encapsulated packet to the second node. This embodiment focuses on the label encapsulation in a case in which the path does not fail, that is, in a case in which the packet is forwarded by still using the default path.

In one embodiment, the step in which the first node forwards the packet to the next hop node according to the target segment list includes: determining, by the first node, an SR outgoing label stack of a Next Hop Label Forwarding Entry (NHLFE) including the target segment list, encapsulating, by the first node, the SR outgoing label stack of the NHLFE including the target segment list into the packet, and sending the encapsulated packet to the next hop node. This embodiment focuses on the label encapsulation in a case in which the path fails, that is, in a case in which the packet is forwarded by using the protection path.

In one embodiment, the step in which the first node encapsulates the SR outgoing label stack of the NHLFE including the target segment list into the packet includes: when the packet is an IP packet, pushing, by the first node, the SR outgoing label stack of the NHLFE on an Internet Protocol (IP) header of the IP packet; and/or when the packet is an SR label packet, replacing, by the first node, an incoming label of the SR label packet with the SR outgoing label stack of the NHLFE.

In one embodiment, the step in which the first node determines an SR outgoing label stack of the NHLFE including the target segment list includes: when the target segment list is the adjacency segment list, determining an index SID of each segment of a link, starting from a second adjacency segment, in the target segment list, forming, in a path order, the SID of each segment of the link and an SR label, allocated by an MRT Egress of the target path to a destination prefix-sid, into a label stack sequentially from a top of the stack to a bottom of the stack, and using the formed label stack as the SR outgoing label stack of the NHLFE; when the target segment list is a node segment list, determining an SR outgoing label corresponding to each segment, starting from a first node segment, in the target segment list, forming, in the path order, the SR outgoing label corresponding to each segment and the SR label, allocated by the MRT Egress of the target path to the destination prefix-sid, into the label stack sequentially from the top of the stack to the bottom of the stack, and using the formed label stack as the SR outgoing label stack of the NHLFE; and when the target segment list is the segment list including the node segment and the adjacency segment, determining the SR outgoing label corresponding to each segment, starting from a first segment, in the target segment list, forming, in the path order, the SR outgoing label corresponding to each segment and the SR label, allocated by the MRT Egress of the target path to the destination prefix-sid, into the label stack sequentially from the top of the stack to the bottom of the stack, and using the formed label stack as the SR outgoing label stack of the NHLFE, where when the first segment is the adjacency segment, the first segment has no corresponding SR outgoing label.

In one embodiment, the method includes at least one of: determining, by the first node, the SR label allocated by the MRT Egress of the target path to the destination prefix-sid, which includes: determining an SRGB allocated by the MRT Egress to a third topology and an SID of a route reaching the second node within the third topology, and determining the SR label allocated by the MRT Egress of the target path to the destination prefix-sid based on the SRGB allocated by the MRT Egress to the third topology and the SID of the route reaching the second node within the third topology; when the first segment of the target segment list is the node segment, determining, by the first node, an outgoing label corresponding to the first node segment in the target segment list, which includes: determining an SRGB allocated by a next hop node reaching the first node segment in the target segment list within the third topology and a node SID of the first node segment within the third topology, and determining the outgoing label corresponding to the first node segment in the target segment list based on the SRGB allocated by the next hop node reaching the first node segment in the target segment list within the third topology and the node SID of the first node segment within the third topology; and when the target segment list is the segment list including the node segment, determining, by the first node, an outgoing label corresponding to each of remaining node segment other than the first segment in the target segment list, which includes: determining an SRGB, allocated by a node, where a previous segment of the each of the remaining node segments is located, to the third topology, in the target segment list and a node SID of the each of the remaining node segments within the third topology, and determining the outgoing label corresponding to the each of the remaining node segments other than the first segment in the target segment list based on the SRGB, allocated by the node, where the previous segment of the remaining node segments is located, to the third topology, in the target segment list and the node SID of the remaining node segments within the third topology, where the node where the previous segment is located is one of: a node represented by the node segment when the previous segment is the node segment and a node represented by the remote node of the adjacency segment when the previous segment is the adjacency segment.

In one embodiment, the method further includes: forwarding, by the MRT Egress of the target path, the packet to the second node based on a next layer label or an IP header after popping the label stack of the target segment list, where when the MRT Egress and the second node are a same node, the packet is sent to the control plane of the second node.

The massage forwarding operation on each transit node of the target path is described below. In one embodiment, when the target segment list is the adjacency segment list, sequentially popping, by the each transit node of the target path, a top-layer label of the packet, and sending the packet with its top-layer label popped to a next hop corresponding to the top-layer label; and/or when the target segment list is the node segment list, popping, by each transit node segment of the target segment list, a top-layer label, from the transit node segment to the node segment, of the packet, and after a next layer label is exchanged into an outgoing label corresponding to a next hop of a next node segment, sending the packet to the corresponding next hop.

The present invention will be described in detail in conjunction with the embodiments below.

In this embodiment, one kind of the MRT Profile is newly added into MRT architecture, and a segment routing forwarding mechanism is used. The default topology forwarding behavior is distinguished from the MRT topology forwarding behavior through the segment routing forwarding mechanism.

An MRT-FRR method based on the segment routing forwarding mechanism in this embodiment includes the steps described below.

In a first step, a new MRT Profile is defined. Compared with the default MRT Profile, the main difference is that the new MRT Profile includes an MRT SR-tunnel forwarding mechanism. The SR-tunnel refers to forwarding behavior of a label stack with one or more outgoing labels formed based on the segment list. For example, if a plurality of nodes included in an MRT path is regarded as one segment list, the behavior of forwarding the packet along the MRT path is actually segment routing forwarding behavior along a node specified by the segment list. In order to enable the packet to be forwarded strictly according to the MRT path, the segment list is generally the adjacency segment list. The segment list may also be the segment list including the node segment, but at this point, the packet is not forwarded strictly according to the MRT path.

In a second step, in a corresponding IGP instance on each of nodes (which may be only part of the nodes) in an IGP area/level, the MRT is enabled, and the new MRT profile described in Step 1 is supported, to generate a corresponding MRT Island for the new MRT profile. A corresponding MRT-red topology and an MRT-blue topology are generated by running the MRT algorithm based on the MRT Island, and the corresponding MT-ID of these two topologies is respectively denoted as MT-red and MT-blue. In addition, the default topology generated based on the SPF algorithm is denoted as MT-default.

In a third step, a source node S in the MRT Island calculates a SPF primary next hop for a prefix in the MRT Island or outside the MRT Island as well as the MRT-blue path or the MRT-red path, that is, (MT-default, prefix) includes the SPF primary next hop, (MT-blue, prefix) includes the MRT-blue path, and (MT-red, prefix) includes the MRT-red path. It is determined which one of the MRT-blue path and the MRT-red path protects the SPF primary next hop through the MRT algorithm.

A corresponding Forwarding Equivalence Class to NHLFE (FTN) table entry is generated according to (MT-default, prefix). The NHLFE includes the SPF primary next hop and the corresponding SR outgoing label, and also includes one of the MRT-red path and the MRT-blue path which is determined to protect the SPF primary next hop. The MRT path is represented by a segment list. A corresponding Incoming Label Map (ILM) table entry is generated according to (MT-default, prefix), and its SR incoming label is calculated based on a prefix-sid corresponding to (MT-default, prefix) as well as an SRGB of the S node. The NHLFE is the same as the FTN entry table described above. If the prefix is a local or direct prefix of the S node, no NHLFE information exists.

Step 4, when a fault occurs, IP or SR label unicast traffic may be forwarded along the MRT path in the method described below.

Under the guidance of an MRT ingress node, the SR label packet is forwarded based on the ILM table entry corresponding to (MT-default, prefix), or the IP packet is forwarded based on the FTN table entry. The traffic is handed over into an MRT backup path included in the NHLFE, such as the MRT-red path. After a top-layer SR incoming label of the SR label packet is exchanged into an SR label allocated by a node corresponding to the last one segment in the segment list to the destination prefix (if the last one segment is the Node Segment, the corresponding node is the Node; and if the last one segment is the Adjacency Segment, the corresponding node is a node represented by the Remote Node-id), an SR outgoing label stack corresponding to the segment list is pushed on the SR label packet, the SR label packet is sent to a first segment; or, after the SR outgoing label stack corresponding to the segment list is directly pushed on the IP packet, the IP packet is sent to the first segment.

Under the guidance of an MRT transmit node, the packet is forwarded based on the ILM table entry corresponding to (MT-default, prefix). After the SR incoming label is exchanged into an SR outgoing label corresponding to a next segment, the packet is sent to the next segment.

Under the guidance of an MRT egress node, the packet is forwarded based on the ILM table entry corresponding to (MT-default, prefix). The packet first pops an SR label corresponding to the last one segment, and then is forwarded based on the next layer SR label allocated for the destination prefix. At this point, after the SR incoming label is exchanged into an SR outgoing label corresponding to a next hop node of the default topology, the packet is forwarded to the next hop node. Or after the SR incoming label is popped from the packet, the packet is forwarded based on an IP header of the packet.

When the MRT backup path on the MRT ingress node is the MRT-blue path, the method for forwarding the IP or SR label unicast traffic along the MRT path is similar to the method described above, which will not be repeated herein.

The implementation of the technical solution will be further described in detail with reference to the drawings.

In the implementation, the MRT Profile used in the present invention is first described.

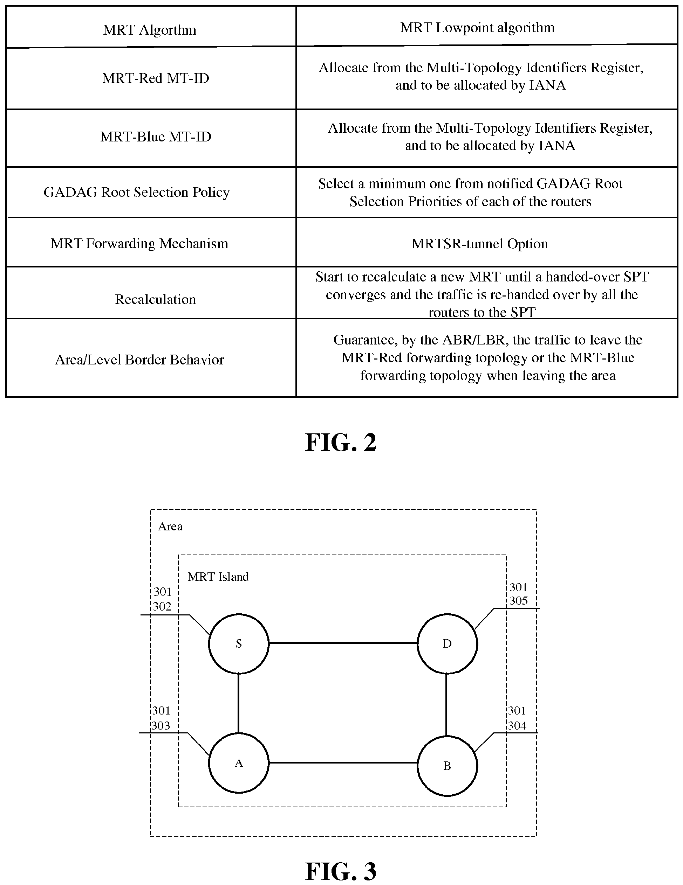

FIG. 2 is a schematic diagram of MRT profile options according to an embodiment of the present invention. The MRT Profile shown in FIG. 2 is basically the same as the default MRT Profile defined in RFC7812. The difference between the two is that the MRT Forwarding Mechanism option is an MRT SR-tunnel Option.

### Embodiment 1

This embodiment describes an MRT path forwarding process in which the destination prefix is located in the MRT Island. FIG. 3 is a schematic diagram of a network topology according to embodiment 1 of the present invention. As shown in FIG. 3, the Open Shortest Path First (OSPF) is run in the network. All nodes are in the same area and enable the segment routing function in the corresponding OSPF instances and the MRT profile defined in this embodiment. The source node S establishes an MRT path to a prefix of a destination node D (such as a loopback routing of D), and then protects an SPF primary path based on this MRT path. The steps are described below.

In step S301, each of the nodes S, A, B and D enables the SR in the OSPF instance and the MRT Profile defined in this embodiment, so that the nodes form the MRT Island in the area.

Each of the nodes obtains the MT-default topology in the area based on the SPF algorithm, and obtains the MT-red topology and the MT-blue topology based on the MRT algorithm. For example, on the node S, the MT-default path from the S node to the destination node D is denoted as S-D, the MT-red path from the S node to the destination node D is also denoted as S-D, and the MT-blue path from the S node to the destination node D is denoted as S-A-B-D.

Each of the nodes generates a corresponding prefix table entry based on the topology. For example, on the S node, an MT-default next hop from the node S to a loopback1 routing of the destination node D in the MT-default topology is denoted as D, and the MT-blue path in the MT-blue topology is chosen to protect the MT-default next hop D. Therefore, a corresponding MRT-FRR path is a segment list {A, B, D}.

Assuming that a Node-SID of the node D in the MT-default topology is SID_D, an SRGB of the node D is SRGB_D, and this operation on the node D may be similarly performed other nodes. Assuming that an Adjacency-SID of a link S-A is SID_SA, an Adjacency-SID of a link A-B is SID_AB, and an Adjacency-SID of a link S-D is SID_BD.

An outgoing label corresponding to the MT-default next hop D is SRGB_D[SID_D-loopback1]. If the MRT-FRR segment list is represented by using the adjacency segment list {adj-S-A, adj-A-B, adj-B-D}, a corresponding incoming label stack from the top of the stack to the bottom of the stack is {SID_SA, SID_AB, SID_BD}. If the MRT-FRR segment list is represented by using the node segment list {A, B, D}, the corresponding incoming label stack from the top of the stack to the bottom of the stack is {SRGB_S[SID_A], SRGB_A[SID_B], SRGB_B[SID _D]}.

The table entry on the node is described below in conjunction with examples.

For the node S:
FTN for (MT-default, D-loopback1)
   the primary NHLFE: the next hop is D, the outgoing label is SRGB_D[SID_D-loopback1]
   the backup NHLFE: (calculated according to the adjacency segment list)
      SID_SA: the top-layer label, which needs to be converted into an outgoing forwarding packet through searching the ILM
      SID AB
      SID BD
      the bottom-layer label SRGB_D[SID_D-loopback1]
   or, the backup NHLFE: (calculated according to the node segment list)
      SRGB_S[SID_A]: the top-layer label, which needs to be converted into the outgoing forwarding packet through searching the ILM
      SRGB_A[SID_B]
      SRGB_B[SID_D]
      the bottom-layer label SRGB_D[SID_D-loopback1]
ILM for (MT-default, SID_D-loopback1)
   the incoming label is SRGB_S[SID_D-loopback1]
   the primary NHLFE: the next hop is D, and the outgoing label is SRGB_D[SID_D-loopback1]
   the backup NHLFE: (if calculated according to the adjacency segment list)
      SID_SA: the top-layer label, which needs to be converted into an outgoing forwarding packet through searching the ILM
      SID AB
      SID BD
      the bottom-layer label SRGB_D[SID_D-loopback1]
   or, the backup NHLFE: (if calculated according to the node segment list)
      SRGB_S[SID_A]: the top-layer label, which needs to be converted into the outgoing forwarding packet through searching the ILM
      SRGB_A[SID_B]
      SRGB_B[SID_D]
      the bottom-layer label SRGB_D[SID_D-loopback1]
ILM for (MT-default, SID_SA)
   the incoming label is SID_SA
   the NHLFE: with the label popped and forwarded along the link S-A
ILM for (MT-default, SID_A)
   the incoming label is SRGB_S[SID_A]
   the NHLFE: the next hop is A, and the outgoing label is SRGB_A[SID_A]

### Node A:

ILM for (MT-default, SID AB)
   the incoming label is SID_AB
   the NHLFE: with the label popped and forwarded along the link A-B
ILM for (MT-default, SID_A)
   the incoming label is SRGB_A[SID_A]
   the NHLFE: none, which means that the SR-LSP has ended.
ILM for (MT-default, SID_B)
   the incoming label is SRGB_A[SID_B]
   the NHLFE: the next hop is B, and the outgoing label is SRGB_B[SID_B]

### Node B:

ILM for (MT-default, SID_BD)
   the incoming label is SID_BD
   the NHLFE: with the label popped and forwarded along the link B-D
ILM for (MT-default, SID_B)
   the incoming label is SRGB_B[SID_B]
   the NHLFE: none, which means that the SR-LSP has ended.
ILM for (MT-default, SID_D)
   the incoming label is SRGB_B[SID_D]
   the NHLFE: the next hop is D, and the outgoing label is SRGB_D[SID_D]

### Node D:

ILM for (MT-default, SID_D)
   the incoming label is SRGB_D[SID_D]
   the NHLFE: none, which means that the SR-LSP has ended.
ILM for (MT-default, D-loopback1)
   the incoming label is SRGB_D[SID_D-loopback1]
   the NHLFE: none, which means that the SR-LSP has ended.

In step S302, for a packet sent to a destination D-loopback1, when the link S-D fails, the node S acting as an MRT ingress node hands over the traffic to a previously prepared MRT-blue path, that is, start to forward the packet along the MRT-blue path S-A-B-D.

If the node S receives an MT-default SR label packet, the MT-default SR label packet is forwarded based on the table entry ILM for (MT-default, D-loopback1), the incoming label SRGB_S[SID_D-loopback1] is exchanged into an outgoing label stack which is, from the top of the stack to the bottom of the stack, {SID_AB, SID_BD, SRGB_D[SID_D-loopback1]} (when using the adjacency segment list), or {SRGB_A[SID_A], SRGB _A[SID_B], SRGB_B[SID_D], SRGB_D[SID_D-loopback1]} (when using the node segment list), and the MT-default SR label packet is sent to the next hop A. If the node S receives an IP packet, the IP packet is forwarded based on the table entry FTN for (MT-default, D-loopback1), the label stack is directly pushed on the IP header, where the label stack is, from the top of the stack to the bottom of the stack, {SID_AB, SID_BD, SRGB_D[SID_D-loopback1]} (when using the adjacency segment list) or {SRGB_A[SID_A], SRGB_A[SID_B], SRGB_B[SID_D], SRGB_D[SID_D-loopback1]} (when using the node segment list), and the IP packet is sent to the next hop A.

In step S303, after the node A receives the packet, the packet is sent to the node B along the link A-B after the top-layer label SID_AB is popped; or, the packet is sent to the node B after the top-layer label SRGB _A[SID_A] is popped and the next layer label SRGB_A[SID_B] is exchanged into SRGB_B[SID_B].

In step S304, after the node B receives the packet, the packet is sent to the node D along the link B-D after the top-layer label SID_BD is popped; or, the packet is sent to the node D after the top-layer label SRGB_B[SID_B] is popped and the next layer label SRGB_B[SID_D] is exchanged into SRGB_D[SID_D].

In step S305, after the node D receives the packet, the packet is forwarded based on the IP header after the top-layer label SRGB_D[SID_D-loopback1] is popped, and since the IP header is D-loopback1, the packet is upwardly sent to the control plane, or the packet is forwarded based on the IP header after the top-layer labels SRGB_D[SID_D] and SRGB_D[SID_D-loopback1] are continuously popped, and since the IP header is D-loopback1, the packet is upwardly sent to the control plane.

According to the embodiment described above, it is known that when the packet is forwarded along the MRT path, the packet is actually forwarded along a corresponding segment list in the default topology.

### Embodiment 2

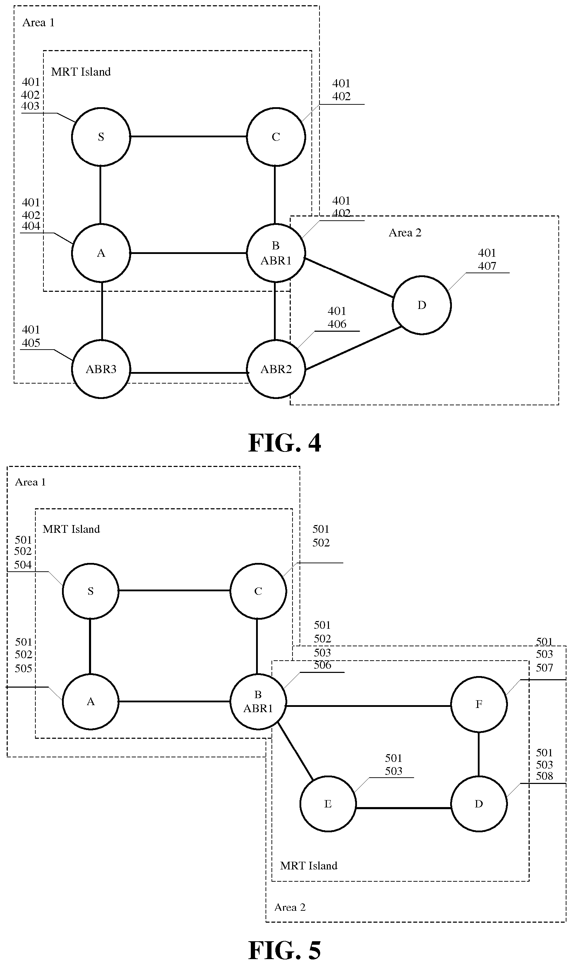

This embodiment will describe an MRT path forwarding process in which the destination prefix is located outside the MRT Island. FIG. 4 is a schematic diagram of a network topology according to embodiment 2 of the present invention. As shown in FIG. 4, the network running the OSPF includes two areas. All nodes enable the segment routing function in the corresponding OSPF instances and the nodes S, A, B and C in the area 1 enable the MRT profile defined in this embodiment. The source node S establishes an MRT path from the source node to a prefix of a destination node D (such as a loopback routing of D), and then protects an SPF primary path based on this MRT path. The steps are described below.

In step S401, all nodes in the area 1 and the area 2 enable the SR in the OSPF instance. Each of the nodes allocates the SRGBs.

In step S402, each of the nodes S, A, B and C in the area 1 enables the MRT Profile defined in this embodiment in the OSPF instance, so that the nodes form an MRT Island in the area 1.

Each of the nodes obtains the MT-default topology in the area based on the SPF algorithm, and obtains the MT-red topology and the MT-blue topology based on the MRT algorithm. For example, on the node S, the MT-default path from the S node to the destination node B is denoted as S-C-B, the MT-red path from the S node to the destination node B is also denoted as S-C-B, and the MT-blue path from the S node to the destination node B is denoted as S-A-B.

Each of the nodes generates a corresponding prefix table entry based on the topology. For example, on the S node, an MT-default next hop from the node S to the prefix D-loopback0 in the MT-default topology is denoted as C (assuming that an ABR1 in the area 1 is a notification node of the prefix D-loopback0, the next hop is determined by using the MT-default path from the node S to the node ABR1. For the prefix D-loopback0, assuming that a remote node A selected in the Tunnel Endpoint Selection method (referring to RFC7812) is used, and assuming that the node S in the MRT Island is used as a GADAG root and S<<A<<B<<C<<S, the MRT-blue path from the node S to the node A is denoted as S-A which is configured to protect the MT-default next hop C. The corresponding MRT-FRR path is the adjacency segment list {S-A} or the node segment list {A}.

An outgoing label corresponding to the MT-default next hop C is SRGB_C[SID_D-loopback0], and an incoming label stack corresponding to the MRT-FRR segment list is {SRGB_S[SID_A]}. Similarly, table entries on representative nodes are selected and listed below. For simplicity, only the content of the table entry when the MRT-FRR path is represented by the node segment list is described.

### Node S:

FTN for (MT-default, D-loopback0)
   the primary NHLFE: the next hop is C, and the outgoing label is SRGB_C[SID_D-loopback0]
   the backup NHLFE:
      SRGB_S[SID_A]: the top-layer label, which needs to be converted into the outgoing forwarding packet through searching the ILM
      the bottom-layer label SRGB_A[SID_D-loopback0]
ILM for (MT-default, SID_D-loopback0)
   the incoming label is SRGB_S[SID_D-loopback0]
   the primary NHLFE: the next hop is C, and the outgoing label is SRGB_C[SID_D-loopback0]
   the backup NHLFE:
      SRGB_S[SID_A]: the top-layer label, which needs to be converted into the outgoing forwarding packet through searching the ILM
      the bottom-layer label SRGB_A[SID_D-loopback0]
ILM for (MT-default, SID_A)
   the incoming label is SRGB_S[SID_A]
   the NHLFE: the next hop is A, and the outgoing label is SRGB_A[SID_A]

### Node A:

ILM for (MT-default, SID_A)
   the incoming label is SRGB_A[SID_A]
   the NHLFE: none, which means that the SR-LSP has ended.
ILM for (MT-default, SID_D-loopback0)
   the incoming label is SRGB_A[SID_D-loopback0]
   the NHLFE: the next hop is ABR3, and the outgoing label is SRGB_ABR3[SID_D-loopback0]

### Node ABR3:

ILM for (MT-default, SID_D-loopback0)
the incoming label is SRGB_ABR3[SID_D-loopback0]
the NHLFE: the next hop is ABR2, and the outgoing label is SRGB_ABR2[SID_D-loopback0]

### Node ABR2:

ILM for (MT-default, SID_D-loopback0)
the incoming label is SRGB_ABR2[SID_D-loopback0]
the NHLFE: the next hop is ABR2, and the outgoing label is SRGB_D[SID_D-loopback0]

### Node D:

ILM for (MT-default, D-loopback0)
the incoming label is SRGB_D[SID_D-loopback0]
the NHLFE: none, which means that the SR-LSP has ended.

In step S403, for a packet sent to a destination D-loopback0, when the link S-C fails, the node S acting as an MRT ingress node hands over the traffic to a previously prepared MRT-blue path, that is, start to forward the packet along the MRT-blue path S-A.

If the node S receives an MT-default SR label packet, the MT-default SR label packet is forwarded based on the table entry ILM for (MT-default, D-loopback0), the incoming label SRGB_S[SID_D-loopback0] is exchanged into an outgoing label stack which is, from the top of the stack to the bottom of the stack, {SRGBA[SID_A], SRGB_A[SID_D-loopback0]}, and the MT-default SR label packet is sent to the next hop A. If the node S receives an IP packet, the IP packet is forwarded based on the table entry FTN for (MT-default, D-loopback0), the label stack is directly pushed on the IP header, where the label stack is, from the top of the stack to the bottom of the stack, {SRGB_A[SID_A], SRGB_A[SID_D-loopback0]}, and the IP packet is sent to the next hop A.

In step S404, after the node A receives the packet, the packet is sent to the node ABR3 after the top-layer label SRGB_A[SID_A] is popped and the next layer label SRGB_A[SID_D-loopback0] is exchanged into SRGB_ABR3[SID_D-loopback0].

In step S405, after the node ABR3 receives the packet, the packet is sent to the node ABR2 after the top-layer label SRGB_ABR3[SID_D-loopback0] is exchanged into SRGB_ABR2[SID_D-loopback0].

In step S406, after the node ABR2 receives the packet, the packet is sent to the node D after the top-layer label SRGB_ABR2[SID_D-loopback0] is exchanged into SRGB_D[SID_D-loopback0].

In step S407, after the node D receives the packet, the packet is forwarded based on the IP header after the top-layer label is popped, and since the IP header is D-loopback0, the packet is upwardly sent to the control plane.

According to the embodiment described above, it is known that when the packet is forwarded along the MRT path, the packet is actually forwarded along a corresponding segment list in the default topology, and after leaving the MRT Island, the packet is forwarded along the shortest path in the default topology, which complies with the forwarding rules defined in RFC7812.

### Embodiment 3

This embodiment will describe an MRT path process in which the destination prefix is located outside the MRT Island, in particular, how to implement the rainbow cross-domain forwarding rule defined by RFC7812 based on the SR-tunnel. FIG. 5 is a schematic diagram of a network topology according to embodiment 3 of the present invention. As shown in FIG. 5, the network running the OSPF includes two areas. All nodes enable the segment routing function in the corresponding OSPF instances. The nodes S, A, B and C in the area 1 enable the MRT profile defined in this embodiment. The nodes B, E, D and F in the area 2 also enable the MRT profile defined in this embodiment. The source node S establishes an MRT path from the source node to a prefix of a destination node D (such as a loopback routing of D), and then protects an SPF primary path based on this MRT path. The steps are described below.

In step S501, all nodes in the area 1 and the area 2 enable the SR in the OSPF instance. Each of the nodes allocates the SRGBs.

In step S502, each of the nodes S, A, B and C in the area 1 enables the MRT Profile defined in this embodiment in the OSPF instance, so that the nodes form an MRT Island in the area 1.

Each of the nodes obtains the MT-default topology in the area based on the SPF algorithm, and obtains the MT-red topology and the MT-blue topology based on the MRT algorithm. For example, on the node S, the MT-default path from the S node to the destination node B is denoted as S-C-B, the MT-red path from the S node to the destination node B is also denoted as S-C-B, and the MT-blue path from the S node to the destination node B is denoted as S-A-B.

Each of the nodes generates a corresponding prefix table entry based on the topology. For example, on the S node, an MT-default next hop from the node S to the prefix D-loopback0 in the MT-default topology is denoted as C (assuming that an ABR1 in the area 1 is a notification node of the prefix D-loopback0, the next hop is determined by using the MT-default path from the node S to the node ABR1). For the prefix D-loopback0, assuming that a remote node B selected in the Tunnel Endpoint Selection method (referring to RFC7812) is used, and assuming that the node S in the MRT Island is used as a GADAG root and S<<A<<B<<C<<S, the MRT-blue path from the node S to the node B is denoted as S-A-B which is configured to protect the MT-default next hop C. The corresponding MRT-FRR path is the segment list {A, B}.

An outgoing label corresponding to the MT-default next hop C is SRGB_C[SID_D-loopback0], and an incoming label stack, from the top of the stack to the bottom of the stack, corresponding to the MRT-FRR segment list is {SRGB_S[SID_A], SRGB_A[SID_B]}.

In step S503, each of the nodes B, E, D and F in the area 2 enables the MRT Profile defined in this embodiment in the OSPF instance, so that the nodes form the MRT Island in the area 1, and generates corresponding MT-default topology, the MT-res topology and the MT-blue topology. Each table entry from each of the nodes to the prefix D-loopback2 in each of the topologies is calculated, which will not be repeated herein.

In view of the above, the table entries on the nodes are described in conjunction of examples. For simplicity, only the content of the table entries when the MRT-FRR path is represented by the node segment list are described.

### Node S:

FTN for (MT-default, D-loopback0)
   the primary NHLFE: the next hop is C, and the outgoing label is SRGB_C[SID_D-loopback0]
   the backup NHLFE:
      SRGB_S[SID_A]: the top-layer label, which needs to be converted into the outgoing forwarding packet through searching the ILM
      SRGB_A[SID_B]
      the bottom-layer label SRGB_B[SID_D-loopback0]
ILM for (MT-default, SID_D-loopback0)
   the incoming label is SRGB_S[SID_D-loopback0]
   the primary NHLFE: the next hop is C, and the outgoing label is SRGB_C[SID_D-loopback0]
   the backup NHLFE:
      SRGB_S[SID_A]: the top-layer label, which needs to be converted into the outgoing forwarding packet through searching the ILM
      SRGB_A[SID_B]
      the bottom-layer label SRGB_B[SID_D-loopback0]
ILM for (MT-default, SID_A)
   the incoming label is SRGB_S[SID_A]
   the NHLFE: the next hop is A, and the outgoing label is SRGB _A[SID_A]

### Node A:

ILM for (MT-default, SID_A)
   the incoming label is SRGB_A[SID_A]
   the NHLFE: none, which means that the SR-LSP has ended.
ILM for (MT-default, SID_B)
   the incoming label is SRGB_A[SID_B]
   the NHLFE: the next hop is B, and the outgoing label is SRGB_B[SID_B]

### Node B:

ILM for (MT-default, SID_B)
   the incoming label is SRGB_B[SID_B]
   the NHLFE: none, which means that the SR-LSP has ended.
ILM for (MT-default, SID_D-loopback0)
   the incoming label is SRGB_B[SID_D-loopback0]
   the NHLFE: the next hop is F, and the outgoing label is SRGB_F[SID_D-loopback0]

### Node F:

ILM for (MT-default, SID_D-loopback0)
the incoming label is SRGB_F[SID_D-loopback0]
the NHLFE: the next hop is D, and the outgoing label is SRGB_D[SID_D-loopback0]

### Node D:

ILM for (MT-default, D-loopback0)
the incoming label is SRGB_D[SID_D-loopback0]
the NHLFE: none, which means that the SR-LSP has ended.

In step S504, for a packet sent to a destination D-loopback0, when the link S-C fails, the node S acting as an MRT ingress node hands over the traffic to a previously prepared MRT-blue path, that is, start to forward the packet along the MRT-blue path S-A-B.

If the node S receives an MT-default SR label packet, the MT-default SR label packet is forwarded based on the table entry ILM for (MT-default, D-loopback0), the incoming label SRGB_S[SID_D-loopback0] is exchanged into an outgoing label stack which is, from the top of the stack to the bottom of the stack, {SRGB_A[SID_A], SRGB_A[SID_B], SRGB_B[SID_D-loopback0]}, and the MT-default SR label packet is sent to the next hop A. If the node S receives an IP packet, the IP packet is forwarded based on the table entry FTN for (MT-default, D-loopback0), the label stack is directly pushed on the IP header, where the label stack is, from the top of the stack to the bottom of the stack, {SRGB_A[SID_A], SRGB_A[SID_B], SRGB_B[SID_D-loopback0]}, and the IP packet is sent to the next hop A.

In step S505, after the node A receives the packet, the packet is sent to the node B after the top-layer label SRGB _A[SID_A] is popped and the next layer label SRGB_A[SID_B] is exchanged into SRGB_B[SID_B].

In step S506, after the node B receives the packet, the packet is sent to the node F after the top-layer label SRGB_B[SID_B] is popped and the next layer label SRGB_B[SID_D-loopback0] is exchanged into SRGB_F[SID_D-loopback0].

In step S507, after the node F receives the packet, the packet is sent to the node D after the top-layer label SRGB_F[SID_D-loopback0] is exchanged into SRGB_D[SID_D-loopback0].

In step S508, after the node D receives the packet, the packet is forwarded based on the IP header after the top-layer label is popped, and since the IP header is D-loopback0, the packet is upwardly sent to the control plane.

According to the embodiment described above, it is known that when the packet is forwarded along the MRT path, the packet is actually forwarded along a corresponding segment list in the MRT Island in the area 1, and after the packet leaves the area 1 and enters the area 2, the packet is forwarded along the SR-LSP in the default topology, which complies with the forwarding rules defined in RFC7812.

From the description of the implementation modes described above, it will be apparent to those skilled in the art that the method in the embodiments described above may be implemented by software plus a necessary general-purpose hardware platform, or may of course be implemented by hardware. However, in many cases, the former is a preferred implementation mode. Based on this understanding, the solution provided by the present invention may be embodied in the form of a software product. The computer software product is stored in a storage medium (such as a ROM/RAM, a magnetic disk or an optical disk) and includes several instructions for enabling a terminal device (which may be a mobile phone, a computer, a server, a network device, or the like) to execute the method according to each embodiment of the present invention.

An embodiment of the present invention further provides a device for forwarding a packet. The device is configured to implement the embodiments described above and preferred embodiments. What has been described will not be repeated. As used below, the term "module" may be software, hardware or a combination thereof capable of implementing predetermined functions. The device described below in the embodiment may be implemented by software, but implementation by hardware or by a combination of software and hardware is also possible and conceived.

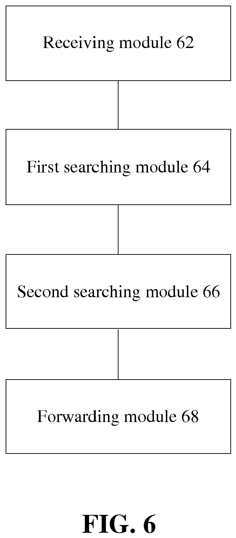

FIG. 6 is a block diagram of a device for forwarding a packet according to an embodiment of the present invention. The device may be applied to a first node. As shown in FIG. 6, the device includes a receiving module 62, a first searching module 64, a second searching module 66 and a forwarding module 68. The device is described below.

The receiving module 62 is configured to receive a packet to be forwarded, where a destination address of the packet is the second node. The first searching module 64 is connected to the receiving module 62 and configured to search a plurality of pre-generated paths for a target path corresponding to the packet, where the plurality of pre-generated paths include a first path, a second path and a third path, the first path and the second path are paths which reach the second node and are generated according to a maximum redundant tree (MRT) algorithm, and the third path is a path which reaches the second node and is generated according to a shortest path first (SPF) algorithm. The second searching module 66 is connected to the first searching module 64 and configured to search a plurality of pre-generated segment lists for a target segment list corresponding to the target path when the target path is one of the first path and the second path, where the plurality of pre-generated segment lists includes a first segment list and a second segment list, the first segment list includes the first path, and the second segment list includes the second path. The forwarding module 68 is connected to the second searching module 66 and configured to search the target path for a next hop node for forwarding to the second node, and forward the packet to the next hop node according to the target segment list. In this embodiment, when the packet is forwarded to the next hop node, the packet may be forwarded according to a predetermined forwarding mechanism. The predetermined forwarding mechanism may be a tunnel forwarding mechanism of a label stack with one or more outgoing labels formed based on a segment list.

In one embodiment, each of the plurality of pre-generated segment lists includes at least one of: an adjacency segment list, and a segment list including a node segment. When a last one segment in the each of the plurality of pre-generated segment lists is an adjacency segment, a remote node of the adjacency segment is an MRT Egress. When the last one segment in the each of the plurality of pre-generated segment lists is the node segment, the node segment is the MRT Egress.

In one embodiment, the device further includes a first processing module. The first processing module is configured to determine a protection path for protecting the third path from the first path and the second path according to the MRT algorithm.

In one embodiment, the first searching module 64 may search the plurality of pre-generated segment lists for the target segment list corresponding to the target path in the following method: determining whether a link in the third path for reaching the second node fails or not, and when the link does not fail, determining that the third path is the target path and/or when the link fails, determining that the protection path is the target path.

In one embodiment, the device further includes a second processing module. The second processing module is configured to, before receiving the packet to be forwarded, perform at least one of operations: generating a first topology according to the MRT algorithm and determining the first path from the first topology; generating a second topology according to the MRT algorithm and determining the second path from the second topology; and generating a third topology according to the SPF algorithm and determining the third path from the third topology. In one embodiment, the second processing module may generate the first topology and the second topology according to the MRT algorithm, and generate the third topology according to the SPF algorithm in the following method: determining an MRT Island where the first node is located, where the MRT Island is formed through mutual negotiation between the first node and remaining nodes in an area or at a level where the first node is located according to an open shortest path first (OSPF) on the first node and the remaining nodes which are located in a same area or at a same level as the first node or after a segment routing (SR) and an MRT profile are enabled in an intermediate system-to-intermediate system (ISIS) instance, and generating the first topology and the second topology by running the MRT algorithm based on the MRT Island, and generating the third topology by running the SPF algorithm based on the area or the level.

In one embodiment, the MRT profile specifies to use the predetermined forwarding mechanism described above, that is, use the tunnel forwarding mechanism of a label stack with one or more outgoing labels formed based on the segment list.

In one embodiment, the device further includes a third processing module. The third processing module is configured to allocate a plurality of SRGBs to the third topology, and flood the plurality of SRGBs in all areas or at all levels where the first node is located; and receive a plurality of SRGBs of the third topology on remaining nodes, record the plurality of SRGBs of the third topology on the remaining nodes and notify the plurality of SRGBs of the third topology on the remaining nodes to a node other than the remaining nodes.

In one embodiment, the device further includes a fourth processing module. The fourth processing module is configured to, when the target path is the third path, encapsulate an SR label, allocated by a next hop node of the third path to a destination prefix-sid, into the packet, and send the encapsulated packet to a next hop node which is found in the third path and used for forwarding the encapsulated packet to the second node.

In one embodiment, the forwarding module 68 may forward the packet to the next hop node in the following method: determining an SR outgoing label stack of a Next Hop Label Forwarding Entry (HHLFE) including the target segment list, encapsulate the SR outgoing label stack of the NHLFE including the target segment list into the packet, and send the encapsulated packet to the next hop node.

In one embodiment, the forwarding module 68 may encapsulate the SR outgoing label stack of the NHLFE including the target segment list into the packet in the following method: when the packet is an IP packet, pushing the SR outgoing label stack of the NHLFE on an Internet Protocol (IP) header of the IP packet; and/or when the packet is an SR label packet, replacing, by the first node, an incoming label of the SR label packet with the SR outgoing label stack of the NHLFE. In one embodiment, the forwarding module 68 may determine an SR outgoing label stack of the NHLFE including the target segment list in the following method: when the target segment list is the adjacency segment list, determining an index SID of each segment of a link, starting from a second adjacency segment, in the target segment list, forming, in a path order, the SID of each segment of the link and an SR label, allocated by an MRT Egress of the target path to a destination prefix-sid, into a label stack sequentially from a top of the stack to a bottom of the stack, and using the formed label stack as the SR outgoing label stack of the NHLFE; when the target segment list is a node segment list, determining an SR outgoing label corresponding to each segment, starting from a first node segment, in the target segment list, forming, in the path order, the SR outgoing label corresponding to each segment and the SR label, allocated by the MRT Egress of the target path to the destination prefix-sid, into the label stack sequentially from the top of the stack to the bottom of the stack, and using the formed label stack as the SR outgoing label stack of the NHLFE; and when the target segment list is the segment list including the node segment and the adjacency segment, determining the SR outgoing label corresponding to each segment, starting from a first segment, in the target segment list, forming, in the path order, the SR outgoing label corresponding to each segment and the SR label, allocated by the MRT Egress of the target path to the destination prefix-sid, into the label stack sequentially from the top of the stack to the bottom of the stack, and using the formed label stack as the SR outgoing label stack of the NHLFE, where when the first segment is the adjacency segment, the first segment has no corresponding SR outgoing label.

In one embodiment, the forwarding module 68 may determine the SR label allocated by the MRT Egress of the target path to the destination prefix-sid in the following method: determining an SRGB allocated by the MRT Egress to a third topology and an SID of a route reaching the second node within the third topology, and determining the SR label allocated by the MRT Egress of the target path to the destination prefix-sid based on the SRGB allocated by the MRT Egress to the third topology and the SID of the route reaching the second node within the third topology. When the first segment of the target segment list is the node segment, the forwarding module 68 may determine the outgoing label corresponding to the first node segment in the target segment list in the following method: determining an SRGB allocated by a next hop node reaching the first node segment in the target segment list within the third topology and a node SID of the first node segment within the third topology, and determining the outgoing label corresponding to the first node segment in the target segment list based on the SRGB allocated by the next hop node reaching the first node segment in the target segment list within the third topology and the node SID of the first node segment within the third topology. When the target segment list is the segment list including the node segment, the forwarding module 68 may determine the outgoing label corresponding to each of remaining node segments other than the first segment in the target segment list in the following method: determining an SRGB, allocated by a node, where a previous segment of the each of the remaining node segments is located, to the third topology, in the target segment list and a node SID of the each of the remaining node segments within the third topology, and determining the outgoing label corresponding to the each of the remaining node segments other than the first segment in the target segment list based on the SRGB, allocated by the node, where the previous segment of the remaining node segments is located, to the third topology, in the target segment list and the node SID of the remaining node segments within the third topology, where the node where the previous segment is located is one of: a node represented by the node segment when the previous segment is the node segment and a node represented by the remote node of the adjacency segment when the previous segment is the adjacency segment. In one embodiment, the MRT Egress of the target path forwards the packet to the second node based on a next layer label or an IP header after popping the label stack of the target segment list, where when the MRT Egress and the second node are a same node, the packet is sent to the control plane of the second node.

In one embodiment, a device for forwarding a packet is further provided. The device is applied to any of other nodes rather than the first node. The device includes: a packet receiving module, which is configured to receive a packet, where a destination address of the packet is a second node; and a packet forwarding module, which is configured to forward the packet, that is, based on a top-layer label or a top-layer IP of the packet, forward the packet to a next hop or upwardly send the packet to the control plane.

It is to be noted that the various modules described above may be implemented by software or hardware. Implementation by hardware may, but is not limited to, be performed in the following modes: the various modules described above are located in a same processor, or the various modules described above are located in their respective processors in any combination form. An embodiment of the present invention further provides a storage medium. In this embodiment, the storage medium may be configured to store program codes for executing the steps described above.

In this embodiment, the storage medium may include, but is not limited to, a U disk, a read-only memory (ROM), a random access memory (RAM), a mobile hard disk, a magnetic disk, an optical disk or another medium capable of storing program codes.

In this embodiment, a processor executes the above steps according to the program codes stored in the storage medium.

For examples in this embodiment, reference may be made to the examples described in the above embodiments and implementation modes, and the examples will not be repeated in this embodiment.

The method described in the embodiments of the present invention fills the gap in the combination of the segment routing network and the MRT function, providing valuable experience for the future network evolution.

Each of the above-mentioned modules or steps of the present invention may be implemented by a universal computing apparatus, they may be concentrated on a single computing apparatus or distributed on a network formed by multiple computing apparatuses, and optionally, they may be implemented by program codes executable by the computing apparatuses, so that they may be stored in a storage apparatus for execution by the computing apparatuses, and in some circumstances, the illustrated or described steps may be executed in sequences different from those described herein, or they may be made into various integrated circuit modules separately, or multiple modules or steps therein may be made into a single integrated circuit module for implementation. In this way, the embodiments of the present invention are not limited to any specific combination of hardware and software.

The above are only the embodiments of the present invention and are not intended to limit the present invention, and for those skilled in the art, the present invention may have various modifications and variations. Any modifications, equivalent substitutions, improvements and the like made within the spirit and principle of the present application should fall within the scope of the present application.

### INDUSTRIAL APPLICABILITY

With embodiments of the present invention, the MRT function is introduced into the segment routing network, thereby implementing the combination of the segment routing network and the MRT function.

## Claims

1. A method for forwarding a packet, comprising:
receiving, by a first node, a packet to be forwarded, wherein a destination address of the packet is a second node;
searching, by the first node, a plurality of pre-generated paths for a target path corresponding to the packet, wherein the plurality of pre-generated paths comprise a first path, a second path and a third path, the first path and the second path are paths which reach the second node and are generated according to a maximum redundant tree (MRT) algorithm, and the third path is a path which reaches the second node and is generated according to a shortest path first (SPF) algorithm;
searching, by the first node, a plurality of pre-generated segment lists for a target segment list corresponding to the target path when the target path is one of the first path and the second path, wherein the plurality of pre-generated segment lists comprise a first segment list and a second segment list, the first segment list comprises the first path, and the second segment list comprises the second path; and
searching, by the first node, the target path for a next hop node for forwarding to the second node, and forwarding the packet to the next hop node according to the target segment list.

2. The method according to claim 1, wherein each of the plurality of pre-generated segment lists comprises at least one of:
an adjacency segment list, and a segment list comprising a node segment;
wherein, when a last one segment in the each of the plurality of pre-generated segment lists is an adjacency segment, a remote node of the adjacency segment is an MRT Egress; and when the last one segment in the each of the plurality of pre-generated segment lists is the node segment, the node segment is the MRT Egress.

3. The method according to claim 1, further comprising:
determining, by the first node, a protection path for protecting the third path from the first path and the second path according to the MRT algorithm.

4. The method according to claim 3, wherein the searching, by the first node, a plurality of pre-generated paths for a target path corresponding to the packet comprises:
determining, by the first node, whether a link for reaching the second node in the third path fails or not;
determining, by the first node, that the third path is the target path when the link does not fail; and
determining, by the first node, that the protection path is the target path when the link fails.

5. The method according to claim 1, wherein before receiving, by a first node, a packet to be forwarded, the method comprises at least one of:
generating, by the first node, a first topology according to the MRT algorithm and determining the first path from the first topology;
generating, by the first node, a second topology according to the MRT algorithm and determining the second path from the second topology; and
generating, by the first node, a third topology according to the SPF algorithm and determining the third path from the third topology.

6. The method according to claim 5, wherein the generating, by the first node, a first topology and a second topology according to the MRT algorithm, and the generating, by the first node, a third topology according to the SPF algorithm comprise:
determining, by the first node, an MRT Island where the first node is located, wherein the MRT Island is formed through mutual negotiation between the first node and remaining nodes in an area or at a level where the first node is located, according to an open shortest path first (OSPF) on the first node and the remaining nodes which are located in a same area or at a same level as the first node or after a segment route (SR) and an MRT profile are enabled in an intermediate system-to-intermediate system (ISIS) instance; and
generating, by the first node, the first topology and the second topology by running the MRT algorithm based on the MRT Island, and generating the third topology by running the SPF algorithm based on the area or the level.

7. The method according to claim 6, wherein the MRT profile specifies to use a tunnel forwarding mechanism of a label stack with one or more outgoing labels formed based on a segment list.

8. The method according to claim 5, further comprising:
allocating, by the first node, a plurality of segment routing global blocks (SRGBs) to the third topology, and flooding the plurality of SRGBs in all areas or at all levels where the first node is located; and
receiving, by the first node, a plurality of SRGBs of the third topology on remaining nodes, recording the plurality of SRGBs of the third topology on the remaining nodes and notifying the plurality of SRGBs of the third topology on the remaining nodes to a node other than the remaining nodes.

9. The method according to claim 1, further comprising:
when the target path is the third path, encapsulating, by the first node, an SR label, allocated by a next hop node of the third path to a destination prefix-sid, into the packet, and sending the encapsulated packet to a next hop node which is found in the third path and used for forwarding the encapsulated packet to the second node.

10. The method of claim 1 or 2, wherein the forwarding, by the first node, the packet to the next hop node according to the target segment list comprises:
determining, by the first node, an SR outgoing label stack of a Next Hop Label Forwarding Entry (NHLFE) comprising the target segment list; and
encapsulating, by the first node, the SR outgoing label stack of the NHLFE comprising the target segment list into the packet, and sending the encapsulated packet to the next hop node.

11. The method according to claim 10, wherein the encapsulating, by the first node, the SR outgoing label stack of the NHLFE comprising the target segment list into the packet comprises at least one of:
when the packet is an IP packet, pushing, by the first node, the SR outgoing label stack of the NHLFE on an Internet Protocol (IP) header of the IP packet; and
when the packet is an SR label packet, replacing, by the first node, an incoming label of an SR label packet with the SR outgoing label stack of the NHLFE.

12. The method according to claim 10, wherein the determining, by the first node, an SR outgoing label stack of a Next Hop Label Forwarding Entry (NHLFE) comprising the target segment list comprises:
when the target segment list is the adjacency segment list, determining an index SID of each segment of a link, starting from a second adjacency segment, in the target segment list, forming, in a path order, the SID of each segment of the link and an SR label, allocated by an MRT Egress of the target path to a destination prefix-sid, into a label stack sequentially from a top of the stack to a bottom of the stack, and using the formed label stack as the SR outgoing label stack of the NHLFE;
when the target segment list is a node segment list, determining an SR outgoing label corresponding to each segment, starting from a first node segment, in the target segment list, forming, in the path order, the SR outgoing label corresponding to each segment and the SR label, allocated by the MRT Egress of the target path to the destination prefix-sid, into the label stack sequentially from the top of the stack to the bottom of the stack, and using the formed label stack as the SR outgoing label stack of the NHLFE; and
when the target segment list is the segment list comprising the node segment and the adjacency segment, determining the SR outgoing label corresponding to each segment, starting from a first segment, in the target segment list, forming, in the path order, the SR outgoing label corresponding to each segment and the SR label, allocated by the MRT Egress of the target path to the destination prefix-sid, into the label stack sequentially from the top of the stack to the bottom of the stack, and using the formed label stack as the SR outgoing label stack of the NHLFE, wherein when the first segment is the adjacency segment, the first segment has no corresponding SR outgoing label.

13. The method according to claim 12, comprising at least one of:
determining, by the first node, the SR label allocated by the MRT Egress of the target path to the destination prefix-sid, comprising:
determining an SRGB allocated by the MRT Egress to a third topology and an SID of a route reaching the second node within the third topology, and
determining the SR label allocated by the MRT Egress of the target path to the destination prefix-sid based on the SRGB allocated by the MRT Egress to the third topology and the SID of the route reaching the second node within the third topology;
when the first segment of the target segment list is the node segment, determining, by the first node, an outgoing label corresponding to the first node segment in the target segment list, comprising:
determining an SRGB allocated by a next hop node reaching the first node segment in the target segment list within the third topology and a node SID of the first node segment within the third topology, and
determining the outgoing label corresponding to the first node segment in the target segment list based on the SRGB allocated by the next hop node reaching the first node segment in the target segment list within the third topology and the node SID of the first node segment within the third topology; and
when the target segment list is the segment list comprising the node segment, determining, by the first node, an outgoing label corresponding to each of remaining node segment other than the first segment in the target segment list, comprising:
determining an SRGB, allocated by a node, where a previous segment of the each of the remaining node segments is located, to the third topology, in the target segment list and a node SID of the each of the remaining node segments within the third topology, and
determining the outgoing label corresponding to the each of the remaining node segments other than the first segment in the target segment list based on the SRGB, allocated by the node, where the previous segment of the remaining node segments is located, to the third topology, in the target segment list and the node SID of the remaining node segments within the third topology, wherein the node where the previous segment is located is one of: a node represented by the node segment when the previous segment is the node segment and a node represented by the remote node of the adjacency segment when the previous segment is the adjacency segment.

14. The method of claim 1 or 2, further comprising:
forwarding, by the MRT Egress of the target path, the packet to the second node based on a next layer label or an IP header after popping the label stack of the target segment list, wherein when the MRT Egress and the second node are a same node, the packet is sent to a control plane of the second node.

15. A device for forwarding a packet, which is applied to a first node, comprising:
a receiving module, which is configured to receive a packet to be forwarded, wherein a destination address of the packet is the second node;
a first searching module, which is configured to search a plurality of pre-generated paths for a target path corresponding to the packet, wherein the plurality of pre-generated paths comprise a first path, a second path and a third path, the first path and the second path are paths which reach the second node and are generated according to a maximum redundant tree (MRT) algorithm, and the third path is a path which reaches the second node and is generated according to a shortest path first (SPF) algorithm;
a second searching module, which is configured to search a plurality of pre-generated segment lists for a target segment list corresponding to the target path when the target path is one of the first path and the second path, wherein the plurality of pre-generated segment lists comprise a first segment list and a second segment list, the first segment list comprises the first path, and the second segment list comprises the second path; and
a forwarding module, which is configured to search the target path for a next hop node for forwarding to the second node, and forward the packet to the next hop node according to the target segment list.
